# EUROPEAN PATENT APPLICATION

(11) **EP 2 352 336 A1**
(43) Date of publication of application: **03.08.2011**
(21) Application number: 09824858.6
(22) Date of filing: 06.11.2009
(51) Int. Cl.: H04W 36/08

(54) **MOBILE STATION AND MOBILE COMMUNICATION METHOD**

(30) Priority: 07.11.2008 JP 2008287106
(71) Applicant: NTT DOCOMO, INC., Chiyoda-ku Tokyo 100-6150 (JP); Panasonic Mobile Communications Co., Ltd., Yokohama-shi Kanagawa 224-8539 (JP)
(72) Inventor: YAMAGISHI, Hiroaki, Tokyo 100-6150 (JP); YAGI, Hideki, Osaka 540-6207 (JP); SUZUKI, Masaaki, Osaka 540-6207 (JP)
(74) Representative: HOFFMANN EITLE
(86) International application number: PCT/JP2009/069002
(87) International publication number: WO 2010/053159

(57) **Abstract**

A mobile station (UE) according to the present invention includes: a reception unit (11) configured to receive broadcast information in a second cell, after a handover from a first cell to the second cell in response to received handover information; and a control unit (12) configured to continue a communication performed in the second cell by using the broadcast information when the reception unit (11) succeeds in receiving the broadcast information, and to perform a re-establishment process when it is determined that the reception unit (11) has failed to receive the broadcast information.

## Description

### TECHNICAL FIELD

The present invention relates to a mobile station and a mobile communication method.

### BACKGROUND WART

In mobile communication systems of the LTE (Long Term Evolution) scheme defined in the 3GPP, a mobile station UE under a communication (RRC_CONNECTED state) is configured to receive broadcast information including MIB (Master Information Block, primary information block), SIB1 (System Information Block 1, first system information block) and SIB2 (System Information Block 2, second system information block) in the second cell, and to continue the communication based on the information, etc., included in the MIB, the SIB1, and the SIB2, when performing a handover from a first cell to the second cell.

### SUMMARY OF THE INVENTION

### PROBLEMS TO BE SOLVED BY THE INVENTION

However, in a mobile communication system of the current LTE scheme, there is a problem in that when a mobile station UE under a communication fails to receive the broadcast information in the second cell that is a handover-target cell, it is not defined how the mobile station UE should operate, and therefore, the communication cannot be continued.

Therefore, the present invention is intended to overcome the above-described problem. An object of the present invention is to provide a mobile station and a mobile communication method capable of continuing a communication even if the reception of the broadcast information is failed in a second cell at the time of a handover from a first cell to the second cell.

### MEANS FOR SOLVING THE PROBLEM

A first aspect of the present invention is summarized as a mobile station including: a reception unit configured to receive broadcast information in a second cell, after a handover from a first cell to the second cell in response to received handover information; and a control unit configured to continue a communication performed in the second cell by using the broadcast information when the reception unit succeeds in receiving the broadcast information, and to perform a re-establishment process when it is determined that the reception unit has failed to receive the broadcast information.

A second aspect of the present invention is summarized as a mobile communication method, including the steps of: receiving, at a mobile station, broadcast information in a second cell, after a handover from a first cell to the second cell in response to received handover information; (A) starting, at the mobile station, a communication performed in the second cell by using the broadcast information, when reception of the broadcast information is succeeded; and (B) performing, at the mobile station, a re-establishment process when it is determined that the reception of the broadcast information is failed.

### EFFECT OF THE INVENTION

As explained above, according to the present invention, it is possible to provide a mobile station and a mobile communication method capable of continuing a communication even if reception of broadcast information is failed in a second cell at the time of a handover from a first cell to the second cell.

### BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a functional block diagram of a mobile station according to the first embodiment of the present invention.
[Fig. 3] Fig. 3 is a flowchart illustrating an operation of the mobile station according to the first embodiment of the present invention.

### BEST MODES FOR CARRYING OUT THE INVENTION

### (Configuration of mobile communication system according to first embodiment of the present invention)

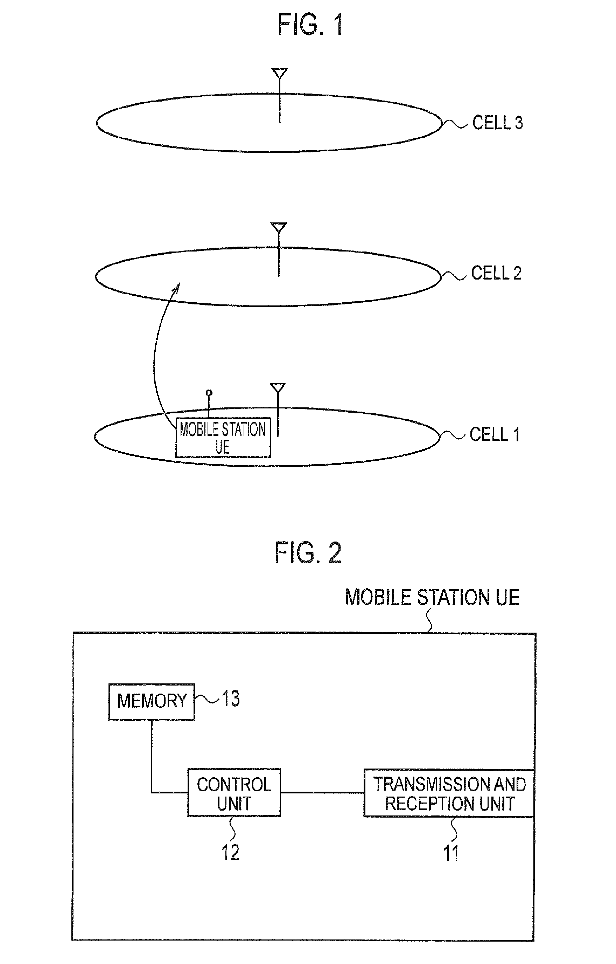

With reference to Fig. 1 and Fig. 2, the configuration of a mobile communication system according to a first embodiment of the present invention will be explained.

As illustrated in Fig. 1, the mobile communication system according to the embodiment is, for example, a mobile communication system of the LTE scheme, and is to include a cell 1, a cell 2, and a cell 3.

Hereinafter, in the embodiment, an example in which mobile station UE performs a handover from the cell 1 (first cell) to the cell 2 (second cell) is explained.

As illustrated in Fig. 2, the mobile station UE includes a transmission and reception unit 11, a control unit 12, and a memory 13.

The transmission and reception unit 11 is configured to perform a communication with a radio base station eNB that manages each cell, via a radio link.

Specifically, the transmission and reception unit 11 is configured to receive broadcast information (for example, MIB, SIB1, and SIB2) transmitted in the cells where the mobile station UE is located.

For example, the transmission and reception unit 11 is configured to receive, when the mobile station UE has performed a handover from the cell 1 to the cell 2, the MIB included in broadcast information in the cell 2, to receive the SIB1 included in the broadcast information based on information included in the MIB, and to receive the SIB2 included in the broadcast information based on scheduling information included in the SIB1.

It is noted that the transmission and reception unit 11 may be configured to repeatedly attempt to receive the broadcast information from a time that it was not possible to initially receive the above-mentioned broadcast information until a predetermined period elapses (predetermined timer expires).

Moreover, the transmission and reception unit 11 may be configured to repeatedly attempt to receive the broadcast information a predetermined number of times only, when the above-mentioned broadcast information cannot be initially received.

The control unit 12 is configured to perform a handover process, a re-establishment process, etc. Moreover, the control unit 12 is configured to perform a reception process on the broadcast information received by the transmission and reception unit 11, and to store the broadcast information in a memory 13 after performing the reception process.

In this case, the control unit 12 is configured to perform a process so that the mobile station UE performs a handover from the cell 1 to the cell 2, in response to a handover command (handover information) received from the radio base station eNB.

The control unit 12 is configured to continue a communication performed in the cell 2 by using the broadcast information, when the transmission and reception unit 11 succeeds in receiving the broadcast information.

On the other hand, the control unit 12 is configured to perform the re-establishment process, regarding that a radio link failure (RLF) occurs in the cell 2, when it is determined that the transmission and reception unit 11 fails to receive the broadcast information.

It is noted that the control unit 12 may be configured to set to perform a cell barred process of the cell 2 in a fixed period, regarding that the radio link failure (RLF) occurs in the cell 2, when it is determined that the transmission and reception unit 11 fails to receive the broadcast information, and thereafter, to perform a re-establishment process on a cell other than the cell 2 (for example, cell 3).

In this case, the "process of performing a cell barred process of the cell 2" is an operation corresponding to the "barred" defined in the "3GPPTS36 .304 v8 .3 . 0", and means a process of removing the cell 2 from Cell Selection and Cell Reselection candidates.

For example, the control unit 12 may be configured to determine that the transmission and reception unit 11 has failed to receive the broadcast information, to perform a cell barred process of the cell 2 in a fixed period, and to perform the re-establishment process on a cell other than the cell 2, when the transmission and reception unit 11 fails to receive the MIB included in the broadcast information.

Moreover, the control unit 12 maybe configured to determine that the transmission and reception unit 11 has failed to receive the broadcast information, to perform a cell barred process of the cell 2 in a fixed period, and to perform the re-establishment process on a cell other than the cell 2, when the transmission and reception unit 11 fails to receive the SID1 after succeeding in receiving the MIB.

Further, the control unit 12 may be configured to determine that the transmission and reception unit 11 has failed to receive the broadcast information, to perform a cell barred process of the cell 2 in a fixed period, and to perform the re-establishment process on a cell other than the cell 2, when he transmission and reception unit 11 fails to receive the SIB2 after succeeding in receiving the MIB and the SIB1.

Moreover, the control unit 12 maybe configured to determine that the transmission and reception unit 11 has failed to receive the broadcast information, to perform a cell barred process of the cell 2 in a fixed period, and to perform the re-establishment process on a cell other than the cell 2, when the scheduling information about the SIB2 is not included in the SIB1 after the transmission and reception unit 11 succeeds in receiving the MIB and the SIB1.

Further, the control unit 12 may be configured to determine that the transmission and reception unit 11 has failed to receive the broadcast information, to perform a cell barred process of the cell 2 in a fixed period, and to perform the re-establishment process on a cell other than the cell 2, when the transmission and reception unit 11 does not succeed in receiving the broadcast information within a predetermined period.

Alternately, the control unit 12 may be configured to determine that the transmission and reception unit 11 has failed to receive the broadcast information, to perform a cell barred process of the cell 2 in a fixed period, and to perform the re-establishment process on a cell other than the cell 2, when the transmission and reception unit 11 does not succeed in receiving the broadcast information in spite of a predetermined number of times of attempts to receive the broadcast information.

It is noted that the control unit 12 may be configured to determine that the transmission and reception unit 11 has failed to receive the broadcast information, to perform a cell barred process of the cell 2 in a fixed period, and to perform the re-establishment process on a cell other than the cell 2, when the MIB, the SIB1, or the SIB2 is also not transmitted in the cell 2.

In this case, when the transmission and reception unit 11 cannot receive the above-mentioned broadcast information, then the control unit 12 cannot recognize "Modification Period" indicating a period in which the broadcast information is modified.

Moreover, when the transmission and reception unit 11 cannot receive the above-mentioned broadcast information, then the control unit 12 cannot receive a paging signal (i.e., an urgency-use paging signal) for ETWS (Earthquake and Tsunami Warning System).

Further, when mentioned broadcast information, then the control unit 12 cannot utilize a predetermined timer and a parameter.

Moreover, when the transmission and reception unit 11 cannot receive the above-mentioned broadcast information, then the control unit 12 cannot acquire PLMN (Public Land Mobile Network)-ID, TA (Tracking Area)-ID, cell ID, etc.

The memory 13 is configured to hold the broadcast information received by the transmission and reception unit 11, for example.

### (Operation of the mobile communication system according to the first embodiment of the present invention)

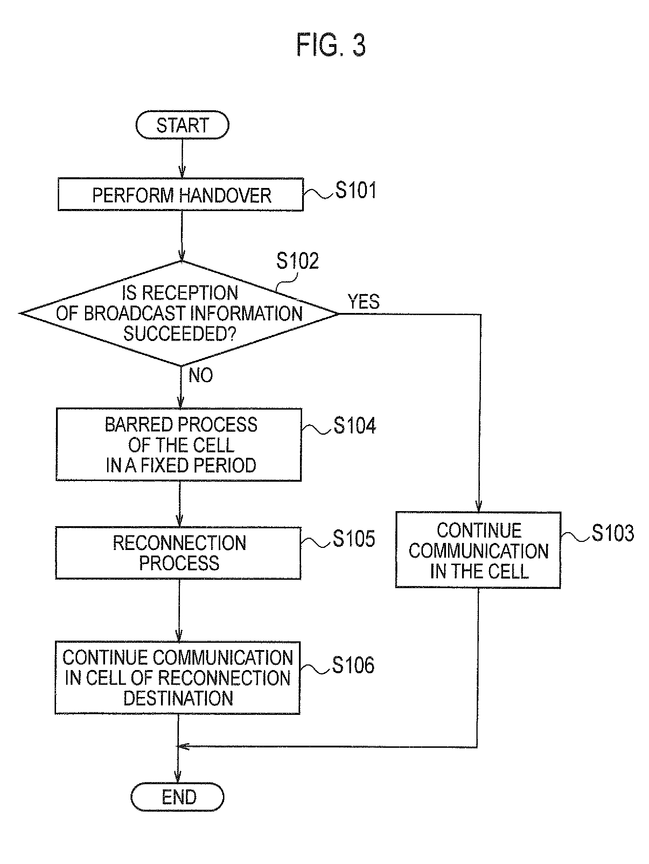

With reference to Fig. 3, the operation of the mobile communication system according to the first embodiment of the present invention, specifically, the operation of the mobile station UE used in the mobile communication system according to the first embodiment of the present invention, will be explained.

As illustrated in Fig. 3, in step S101, the mobile station UE performs a handover from the cell 1 to the cell 2.

In step S102, the mobile station UE performs a reception process on the broadcast information such as the MIB, the SIB1, and the STB2. When such a reception process is succeeded, the operation proceeds to step S103, and when it is determined that the reception process is failed, the operation proceeds to step S104.

In step S103, the mobile station UE uses the broadcast information, etc., in the cell 2, so as to continue the communication.

In step S104, the mobile station UE removes the cell 2 from the cell selection and cell reselection candidates in a fixed period, i.e., performs a cell barred process of the cell 2.

In step S105, the mobile station UE performs a re-establishment process on the cell 2 or a cell other than the cell 2.

In step S106, in a re-establishment-target cell, the mobile station UE uses the broadcast information, etc., received in the re-establishment-target cell, so as to continue the communication.

It is noted that in the above-mentioned operations, the process in step S104 may not be performed.

### (Operation and Effect of the mobile communication system according to the first embodiment of the present invention)

According to the mobile communication system based on the first embodiment of the present invention, when it is determined that the reception of the broadcast information in the handover-target cell is failed, the mobile station UE can continue the communication by performing a re-establishment process on another cell.

The above-mentioned aspects of the embodiments may be expressed as follows:

A first aspect of the embodiment is summarized as a mobile station UE including: a transmission and reception unit 11 configured to receive, at the time of a handover from a cell 1 (first cell) to a cell 2 (second cell) in response to received handover information (for example, a handover command) , broadcast information (for example, MIB, SIB1, and SIB2) in the cell 2; and a control unit 12 configured to continue a communication performed in the cell 2 by using the broadcast information when the transmission and reception unit 11 succeeds in receiving the broadcast information, and to perform a re-establishment process when it is determined that the transmission and reception unit 11 has failed to receive the broadcast information.

In this case, as a candidate of a re-establishment-target cell, a cell (for example, a cell 3) other than the cell 2 may be selected, and a cell including the cell 2 may also be selected.

In the first aspect of this embodiment, the control unit 12 may be configured to perform a re-establishment process on a cell (for example, a cell 3) other than the cell 2, when it is determined that the reception unit 11 has failed to receive the broadcast information.

In the first aspect of the embodiment, the control unit 12 may be configured to determine that the transmission and reception unit 11 has failed to receive the broadcast information, when the transmission and reception unit 11 fails to receive the MIB included in the broadcast information.

In the first aspect of the embodiment, the transmission and reception unit 11 may be configured to receive the MIB included in the broadcast information and to receive the SIB1 included in the broadcast information based on information included in the MIB, and the control unit 12 may be configured to determine that the transmission and reception unit 11 has failed to receive the broadcast information, when the transmission and reception unit 11 fails to receive the SIB1 after succeeding in receiving the MIB.

In the first aspect of the embodiment, the transmission and reception unit 11 may be configured to receive the MIB included in the broadcast information, to receive the SIB1 included in the broadcast information based on information included in the MIB, and to receive the SIB2 included in the broadcast information based on scheduling information included in the SIB1; and the control unit 12 may be configured to determine that the transmission and reception unit 11 has failed to receive the broadcast information, when the transmission and reception unit 11 fails to receive the SIB2, after succeeding in receiving the MIB and the SIB1.

In the first aspect of the embodiment, the transmission and reception unit 11 may be configured to receive the MIB included in the broadcast information, to receive the SIB1 included in the broadcast information based on information included in the MIB, and to receive the SIB2 included in the broadcast information based on information included in the SIB1; and the control unit 12 may be configured to determine that the transmission and reception unit 11 has failed to receive the broadcast information, when the scheduling information is not included in the SIB1, after the transmission and reception unit 11 succeeds in receiving the MIB and the SIB1.

In the first aspect of the embodiment, the control unit 12 may be configured to determine that the transmission and reception unit 11 has failed to receive the broadcast information, when the transmission and reception unit 11 does not succeed in receiving the broadcast information within a predetermined period.

In the first aspect of the embodiment, the control unit 12 may be configured to determine that the transmission and reception unit 11 has failed to receive the broadcast information, when the transmission and reception unit 11 does not succeed in receiving the broadcast information in spite of a predetermined number of times of attempts to receive the broadcast information.

In the first aspect of this embodiment, when the control unit 12 determines that the transmission and reception unit 11 has failed to receive the broadcast information, the control unit 12 may be configured to perform, after performing a cell barred process of the cell 2 in a fixed period, a re-establishment process on a cell (for example, a cell 3) other than the cell 2.

A second aspect of the embodiment is summarized as a mobile communication method including the steps of: receiving, at a mobile station UE, broadcast information in a cell 2, after a handover from a cell 1 to the cell 2 in response to received handover information; (A) starting, at the mobile station UE, a communication performed in the cell 2 by using the broadcast information, when reception of the broadcast information is succeeded; and (B) performing, at the mobile station UE, a re-establishment process when it is determined that the reception of the broadcast information is failed.

In the second aspect of the embodiment, in the step (B), the mobile station UE may perform a re-establishment process on a cell other than the second cell, when it is determined that the reception of the broadcast information is failed.

In the second aspect of the embodiment, in the step (B), when it is determined that the reception of the broadcast information is failed, the mobile station UE may perform a re-establishment process on a cell other than the cell 2 after performing a cell abandonment of the cell 2 in a fixed period.

The operation of the above-described mobile station UE or radio base station eNB may be implemented by a hardware, may also be implemented by a software module executed by a processor, and may further be implemented by the combination of the both.

The software module may be arranged in a storing medium of an arbitrary format such as RAM(Random Access Memory), a flash memory, ROM(Read Only Memory) , EPROM (Erasable Programmable ROM) , EEPROM (electronically Erasable and Programmable ROM), a register, a hard disk, a removable disk, and CD-ROM.

Such a storing medium is connected to the processor so that the processor can write and read information into and from the storing medium. Such a storing medium may also be accumulated in the processor. Such a storing medium and processor may be arranged in ASIC. Such ASIC may be arranged in the mobile station UE and the radio base station eNB . As a discrete component, such a storing medium and processor may be arranged in the mobile station UE and the radio base station eNB.

Thus, the present invention has been explained in detail by using the above-described embodiments; however, it is obvious that for persons skilled in the art, the present invention is not limited to the embodiments explained herein. The present invention can be implemented as a corrected, modified mode without departing from the gist and the scope of the present invention defined by the claims. Therefore, the description of the specification is intended for explaining the example only and does not impose any limited meaning to the present invention.

## Claims

1. A mobile station comprising:
a reception unit configured to receive broadcast information in a second cell, after a handover from a first cell to the second cell in response to received handover information; and
a control unit configured to continue a communication performed in the second cell by using the broadcast information when the reception unit succeeds in receiving the broadcast information, and to perform a re-establishment process when it is determined that the reception unit has failed to receive the broadcast information.

2. The mobile station according to claim 1, wherein
the control unit is configured to perform the re-establishment process on a cell other than the second cell, when it is determined that the reception unit has failed to receive the broadcast information.

3. The mobile station according to claim 1, wherein
the control unit is configured to determine that the reception unit has failed to receive the broadcast information, when the reception unit has failed to receive a primary information block included in the broadcast information.

4. The mobile station according to claim 1, wherein
the reception unit is configured to receive a primary information block included in the broadcast information, and to receive a first system information block included in the broadcast information based on information included in the primary information block; and
the control unit is configured to determine that the reception unit has failed to receive the broadcast information when the reception unit fails to receive the first system information block after succeeding in receiving the primary information block.

5. The mobile station according to claim 1, wherein
the reception unit is configured to receive a primary information block included in the broadcast information, to receive a first system information block included in the broadcast information based on information included in the primary information block, and to receive a second system information block included in the broadcast information based on scheduling information included in the first system information block; and
the control unit is configured to determine that the reception unit has failed to receive the broadcast information when the reception unit fails to receive the second system information block after succeeding in receiving the primary information block and the first system information block.

6. The mobile station according to claim 1, wherein
the reception unit is configured to receive a primary information block included in the broadcast information, to receive a first system information block included in the broadcast information based on information included in the primary information block, and to receive a second system information block included in the broadcast information based on information included in the first system information block; and
the control unit is configured to determine that the reception unit has failed to receive the broadcast information when the scheduling information is not included in the first system information block after the reception unit succeeds in receiving the primary information block and the first system information block.

7. The mobile station according to claim 1, wherein
the control unit is configured to determine that the reception unit has failed to receive the broadcast information, when the reception unit does not succeeds in receiving the broadcast information within a predetermined period.

8. The mobile station according to claim 1, wherein
the control unit is configured to determine that the reception unit has failed to receive the broadcast information, when the reception unit does not succeed in receiving the broadcast information in spite of a predetermined number of times of attempts to receive the broadcast information.

9. The mobile station according to claim 2, wherein
the control unit is configured to perform a re-establishment process on a cell other than the second cell, after performing a cell barred process of the second cell in a fixed period, when the control unit determines that the reception unit has failed to receive the broadcast information.

10. A mobile communication method, comprising the steps of:
receiving, at a mobile station, broadcast information in a second cell, after a handover from a first cell to the second cell in response to received handover information;
(A) starting, at the mobile station, a communication performed in the second cell by using the broadcast information, when reception of the broadcast information is succeeded; and
(B) performing, at the mobile station, a re-establishment process when it is determined that the reception of the broadcast information is failed.

11. The mobile communication method according to claim 10, wherein
in the step (B), the mobile station performs the re-establishment process on a cell other than the second cell, when it is determined that the reception of the broadcast information is failed.

12. The mobile communication method according to claim 11, wherein
in the step (B), the mobile station performs the re-establishment process on a cell other than the second cell, after performing a cell barred process of the second cell in a fixed period, when it is determined that the reception of the broadcast information is failed.
